# EUROPÄISCHE PATENTSCHRIFT

(11) **EP 0 406 217 B1**
(45) Veröffentlichungstag und Bekanntmachung des Hinweises auf die Patenterteilung: **28.09.1994**
(21) Anmeldenummer: 90890187.9
(22) Anmeldetag: 21.06.1990
(51) Int. Cl.: A01B 39/16, A01B 13/06

(54) **Verfahrbare Vorrichtung zum Mähen**
Mobile apparatus for mowing
Dispositif mobile pour faucher

(30) Priorität: 27.06.1989 AT 1582/89
(43) Veröffentlichungstag der Anmeldung: 02.01.1991
(73) Patentinhaber: Dingsleder, Ferdinand, A-8430 Leibnitz (AT)
(72) Erfinder: Dingsleder, Ferdinand, A-8430 Leibnitz (AT)
(74) Vertreter: Brauneiss, Leo, Dipl.Ing.

(56) Entgegenhaltungen:
- EP-A- 0 234 023
- WO-A-86/01368
- DE-A- 3 638 076
- DE-B- 1 215 418
- FR-A- 2 578 384
- FR-A- 2 617 366
- GB-A- 900 255
- US-A- 2 749 824
- US-A- 3 913 681
- US-A- 4 585 071

## Beschreibung

Die Erfindung betrifft eine verfahrbare Vorrichtung zum Mähen von Grundstücken, die von der Bodenoberfläche abstehende Hindernisse aufweisen, mit einer um eine erste, senkrecht zur Bodenoberfläche verlaufende Achse in einer ersten Ebene rotierenden Messerscheibe die eine Mäheinrichtung bildet, und die an einem Arm angeordnet ist, der um eine zweite senkrecht zur Bodenoberfläche verlaufende Achse mittels einer Betätigungseinrichtung, vorzugsweise einer druckmittelbetätigten Kolben-Zylinderanordnung, verschwenkbar ist, wobei die Betätigungseinrichtung für den Arm von einem Steuergerät, vorzugsweise einem in einer Druckmittelzufuhrleitung zur Kolben-Zylinderanordnung angeordneten Steuerventil, gesteuert ist, das mit einem in einer zweiten Ebene verschwenkbaren Fühler in Wirkverbindung steht, der der Form des kreisförmigen Umfanges der rotierenden Messerscheibe angepaßt ist und am verschwenkbaren Arm oder an einem zusammen mit diesem Arm verschwenkbaren Teil gelagert ist.

Bei Grundstücken, bei welchen von der Bodenoberfläche Hindernisse abstehen, also beispielsweise bei Weingärten mit in Reihen angeordneten Weinstöcken oder bei Gärten mit in Reihen angeordneten Obstbäumen, ist das Mähen, zwischen den Weinstöcken, Obstbäumen od.dgl. schwierig durchzuführen. Das maschinelle Mähen erfolgt in der Regel durch ein an der Rückseite eines Traktors, beispielsweise an der Dreipunktaufhängung desselben, angebrachtes Anbaugerät, das von der Zapfwelle des Traktors angetrieben ist. Durchfährt der Traktor den Streifen zwischen zwei benachbarten Reihen von Weinstöcken, Obstbäumen od.dgl., so wird durch das Anbaugerät lediglich dieser Streifen bearbeitet, nicht jedoch der Zwischenraum zwischen benachbarten Weinstöcken, Obstbäumen od. dgl. einer Reihe, der zumeist händisch nachbearbeitet werden muß.

Um den Nachteil einer händischen Bearbeitung dieses Zwischenraumes zu vermeiden, hat man bereits vorgeschlagen, an der Rückseite eines Traktors einen um eine im wesentlichen senkrecht zur Bodenoberfläche verlaufende Achse schwenkbaren Arm anzuordnen, der eine von der Zapfwelle des Traktors angetriebenes Mäheinrichtung trägt, sowie einen Fühler vorzusehen, der die Schwenkbewegung des Armes beeinflußt. Dieser Arm mit der Mäheinrichtung, der zusätzlich zu der den Streifen zwischen benachbarten Reihen bearbeitenden Anbauvorrichtung vorgesehen ist, ermöglicht ein Mähen der Bodenoberfläche zwischen benachbarten Weinstöcken, Obstbäumen od.dgl. einer Reihe mittels der am Arm befestigten Mäheinrichtung dadurch, daß der Arm mit der Mäheinrichtung in den Zwischenraum zwischen benachbarten Weinstücken, Obstbäumen od.dgl. einer Reine einschwenkt, jedoch beim Passieren eines Weinstockes, Obstbaumes od.dgl. zurückweicht.

Bei einer bekannten Einrichtung dieser Art ist der Arm durch eine Feder derart belastet, daß er in seine ausgeschwenkte Stellung gedrückt wird, und ist mit einem Fühler versehen, der beim Passieren eines Weinstockes, Obstbaumes od.dgl. an diesem zur Anlage gelangt, und der so geformt ist, daß er den Arm entgegen der Kraft der Feder in eine Lage zurückschwenkt, in der die Einrichtung den Weinstock, Obstbaum od. dgl. nicht berührt. Eine derartige Vorrichtung weist wesentliche Nachteile auf. Ist die Kraft der den Arm belastenden Feder zu schwach, so ist diese fallweise, beispielsweise bei Hangfahrten, nicht mehr in der Lage, den Arm tatsächlich in die ausgeschwenkte Lage zu drücken. Wird eine kräftige Feder verwendet, so muß auch eine entsprechend große Gegenkraft über den Fühler aufgebracht werden, um den Arm entgegen der Kraft der Feder zurückzuschwenken, wodurch eine Beschädigung der Weinstöcke, Obstbäume od.dgl. durch den Fühler hervorgerufen werden kann.

Man hat daher bereits vorgeschlagen (US-A-4 104 851), den Arm mittels einer druckmittelbetätigten Kolben-Zylinderanordnung zu verschwenken, wobei in der Druckmittelzufuhrleitung ein Steuerventil angeordnet ist, das mit einem Fühler in Wirkverbindung steht, der beim Passieren eines Baumes od.dgl. verschwenkt wird und dadurch die Druckmittelzufuhr zur Kolben-Zylinderanordnung steuert. Bei dieser bekannten Anordnung ist der Fühler am Steuerventil schwenkbar gelagert, welches an einem die Schwenkachse für den Arm aufweisenden Rahmen montiert ist. Bei dieser bekannten Anordnung sind zwar für die Verschwenkung des Fühlers nur geringe Kräfte erforderlich, da die Verschwenkung des Fühlers nicht eine unmittelbare Verschwenkung des Armes, der die Mäheinrichtung trägt, sondern nur eine Betätigung des Steuerventiles bewirkt, das die Druckmittelzufuhr zur die Schwenkbewegung des Armes verursachenden Kolben-Zylinderanordnung steuert, sodaß eine Beschädigung der Obstbäume od.dgl. durch den Fühler vermieden wird, nachteilig ist jedoch bei dieser bekannten Anordnung, daß die auftretenden Hindernisse durch den Fühler nicht exakt erfaßt werden und daher eine exakte Schwenkbewegung des Armes beim Auftreten dieser Hindernisse nicht gewährleistet ist.

Eine Vorrichtung der eingangs beschriebenen Art ist weiters aus der EP-A-234 023 bekannt geworden. Auch diese bekannte Vorrichtung gemäß dem Oberbegriff des Patentanspruchs 1 läßt offensichtlich kein Mähen des Grundstückes durch die rotierende Messerscheibe bis in die unmittelbare Nähe des Hindernisses zu, ohne daß eine Beschädigung dieses Hindernisses durch die rotierende Messerscheibe mit Sicherheit vermieden wird, da beispielsweise in Hanglagen, wie sie beim Weinbau häufig vorkommen, die erste, senkrecht zur Bodenoberfläche verlaufende Achse mit der Vertikalen einen Winkel einschließt und dadurch die Gefahr besteht, daß die rotierende Messerscheibe mit dem Hindernis bereits in Kontakt tritt, bevor das Hindernis den Fühler berührt und dadurch ein Verschwenken der Betätigungseinrichtung eingeleitet wird.

Die vorliegende Erfindung hat sich zur Aufgabe gestellt, die Nachteile der bekannten Vorrichtungen zu vermeiden und eine Vorrichtung der eingangs beschriebenen Art zu schaffen, die ein exaktes Ausschwenken des die Mäheinrichtung tragendem Armes beim Auftreten eines Hindernisses sicherstellt. Weiters soll sich die erfindungsgemäße Vorrichtung selbsttätig dem zu bearbeitenden Bodenniveau, insbesondere bei Hanglage, anpassen können.

Zur Lösung dieser Aufgabe schlägt die Erfindung vor, daß die erste Ebene und die zweite Ebene zusammenfallen, sodaß der Fühler in einer Ebene mit der rotierenden Messerscheibe angeordnet ist, wobei der Fühler den Umfang der kreisförmigen rotierenden Messerscheibe zumindest teilweise umgibt. Dadurch wird sichergestellt, daß das Mähen durch die rotierende Messerscheibe auch in unmittelbarer Nähe des Hindernisses erfolgt, wobei der Fühler gleichzeitig eine Schutzfunktion ausübt, also verhindert, daß das Hindernis durch die rotierende Messerscheibe beschädigt wird.

Zweckmäßig ist das Steuerventil durch eine Federanordnung in seiner einen Endstellung gehalten und durch den Fühler entgegen der durch die Federanordnung ausgeübten Kraft in seine andere Endstellung verschiebbar. In jener Endstellung, in der das Steuerventil durch die Federanordnung gehalten ist, wird der Kolben-Zylinderanordnung ein Druckmittel zugeführt, wodurch diese Anordnung den Arm in eine Lage verschwenkt, in der sich die Mäheinrichtung im Zwischenraum zwischen zwei benachbarten Hindernissen einer Reihe befindet. Wird das Steuerventil durch den Fühler in seine andere Endstellung verschoben, so erfolgt eine Druckentlastung der Kolben-Zylinderanordnung, wodurch der Arm zurückschwenkt.

Gemäß einem weiteren Merkmal der Erfindung weist die Kolben-Zylinderanordnung einen zweiseitig beaufschlagten Kolben auf, wobei der von der einen Kolbenseite begrenzte Zylinderraum an die das Steuergerät aufweisende Druckmittelzufuhrleitung angeschlossen ist, wogegen der von der anderen Kolbenseite begrenzte Zylinderraum einen abgeschlossenen Raum bildet oder mit einem zusätzlichen abgeschlossenen Raum in Verbindung steht, in welchem Zylinderraum bzw. zusätzlichen Raum ein komprimierbares Medium, insbesondere Luft, vorhanden ist. Bei der bekannten Vorrichtung der eingangs beschriebenen Art weist die Kolben-Zylinderanordnung für die Verschwenkung des Armes einen zweiseitig beaufschlagten Kolben auf, wobei jedoch jeder der von den beiden Kolbenseiten begrenzten Zylinderräume an eine Druckmittelzufuhrleitung angeschlossen ist, in der das Steuergerät angeordnet ist. Bei der erfindungsgemäßen Ausbildung hingegen, wird lediglich einem der beiden Zylinderräume Druckmittel zugeführt, wogegen sich im anderen Zylinderraum das komprimierbare Medium, insbesondere Luft, mit einem Druck von etwa 4 bar befindet, das eine Luftfeder bildet, durch welche bei einer Entlastung des anderen Zylinderraumes der Kolben in eine Lage verschoben wird, in der der Arm eingeschwenkt ist. Wird dem mit der Druckmittelzufuhrleitung verbundenen Zylinderraum Druckmittel zugeführt, so wird entgegen der Kraft der Luftfeder der Kolben in eine Lage verschoben, in der der Arm ausgeschwenkt ist, und zwar solange, bis durch entsprechende Betätigung des Steuerventiles dieser, Zylinderraum wieder druckentlastet wird. Dadurch wird die Steuerung der Kolbenbewegung vereinfacht und die Kolbenbewegung gedämpft.

Die Schwenkbewegung des Armes erfolgt somit vollautomatisch in Abhängigkeit von der Bewegung des die Lage der Hindernisse abtastenden Fühlers. Es ist jedoch zweckmäßig, auch eine händische Verschwenkung des Armes vornehmen zu können. Zu diesem Zweck kann eine manuell steuerbare Einrichtung zur Verschwenkung des die Mäheinrichtung tragenden Armes vorgesehen sein. Vorzugsweise ist hierbei der an die Druckmittelzufuhrleitung angeschlossene Zylinderraum mit einer Entlastungsleitung verbunden, in der ein manuell steuerbares Ventil, vorzugsweise ein durch einen elektrischen Schalter betätigbares Magnetventil, angeordnet ist. Über diese Entlastungsleitung, die beispielsweise in einen das Druckmittel aufnehmenden Tank mündet, kann der vom Druckmittel beaufschlagte Zylinderraum drucklos gemacht werden, sodaß sich durch das im anderen Zylinderraum befindliche komprimierbare Medium der Kolben in eine Lage verschiebt, in der der Arm zurückschwenkt. Die Anordnung eines elektrisch betätigbaren Magnetventiles ermöglicht es, wenn die erfindungsgemäße Vorrichtung an der Rückseite eines Traktors angebaut ist, den Schalter in der Fahrerkabine anzuordnen und über ein elektrisches Kabel mit dem Magnetventil zu verbinden, sodaß der Fahrer das Magnetventil manuell betätigen kann, ohne die Fahrerkabine zu verlassen.

Gemäß einer bevorzugten Ausführungsform der Erfindung sind die Schwenkachse des die Mäheinrichtung und den Fühler tragenden Armes, die Betätigungseinrichtung zur Verschwenkung desselben und das Steuergerät auf einem Träger angeordnet, der um eine im wesentlichen senkrecht zur Schwenkachse des Armes verlaufende Achse schwenkbar gelagert ist. Dadurch wird nicht nur der Anbau der erfindungsgemäßen Vorrichtung an einem Traktor od. dgl. erleichtert, da lediglich der Träger über eine Schwenkachse beispielsweise mit einer Aufhängung an der Rückseite des Traktors schwenkbar verbunden werden muß, sondern es wird auch eine Anpassung der Lage des Armes mit der Mäheinrichtung an das jeweilige Bodenniveau durch Verschwenkung des Trägers um seine Achse sichergestellt. Eine solche Anpassung ist vor allem bei Hangfahrten wichtig, da ohne eine solche Anpassung der gewünschte Abstand zwischen der Bodenoberfläche und der Mäheinrichtung nicht konstant gehalten werden kann. Diese Ausbildung ermöglicht aber auch ein Hochschwenken des Trägers mit den darauf befindlichen Einrichtungen, falls die erfindungsgemäße Vorrichtung nicht zum Einsatz gelangen soll, aber trotzdem nicht abgebaut werden soll.

Insbesondere bei Verwendung der erfindungsgemäßen Vorrichtung auf unebenem Gelände ist es bei dieser Ausführungsform von Vorteil, wenn eine Lagerstelle der Achse in einer zur Schwenkachse etwa parallelen Richtung verstellbar angeordnet ist, sodaß sich der Träger und damit auch die Mäheinrichtung unabhängig vom Traktor od.dgl. an die Unebenheiten anpassen kann.

Für die Einhaltung des gewünschten Abstandes zwischen dem Bodenniveau und der Mäheinrichtung ist es von Vorteil, wenn der Träger mit wenigstens einer die Bodenoberfläche berührenden Stützeinrichtung, insbesondere wenigstens einem an der Bodenoberfläche abrollenden Stützrad versehen ist, welche Stützeinrichtung nicht nur den Bodenabstand sicherstellt, sondern auch einen Teil des Gewichtes des Trägers und der darauf befindlichen Einrichtungen aufnimmt.

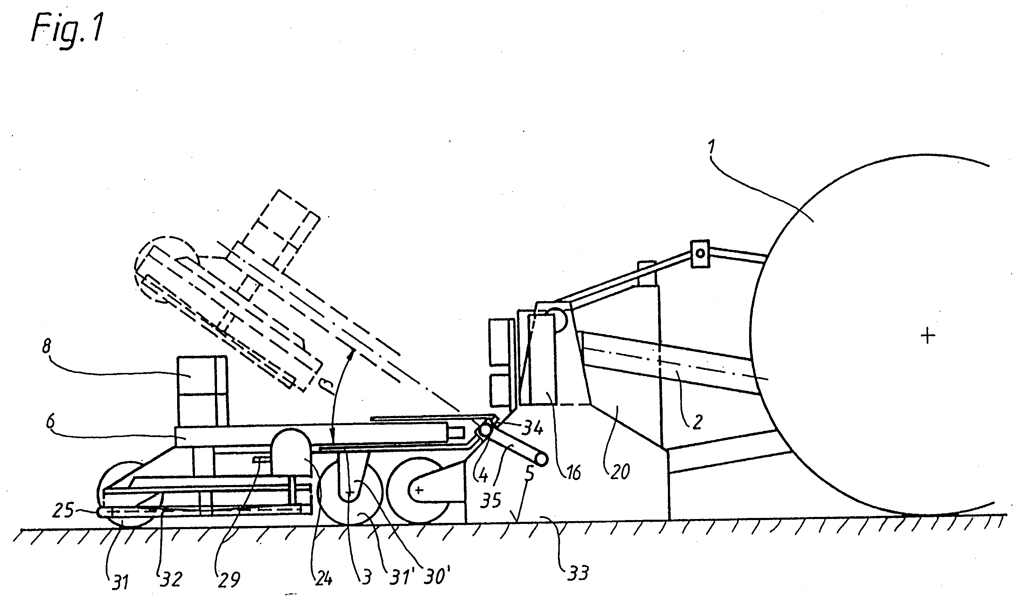

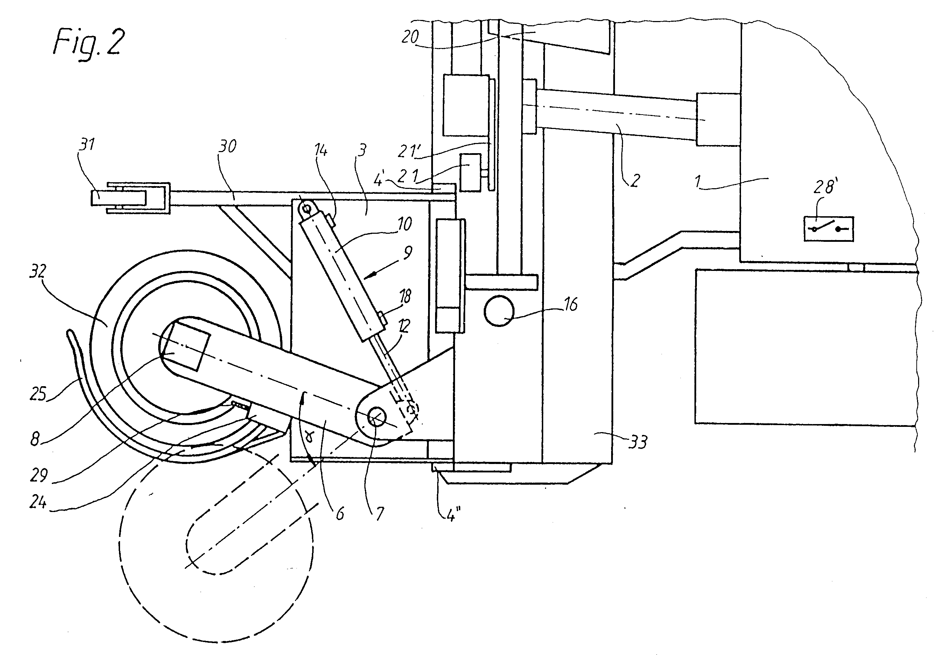

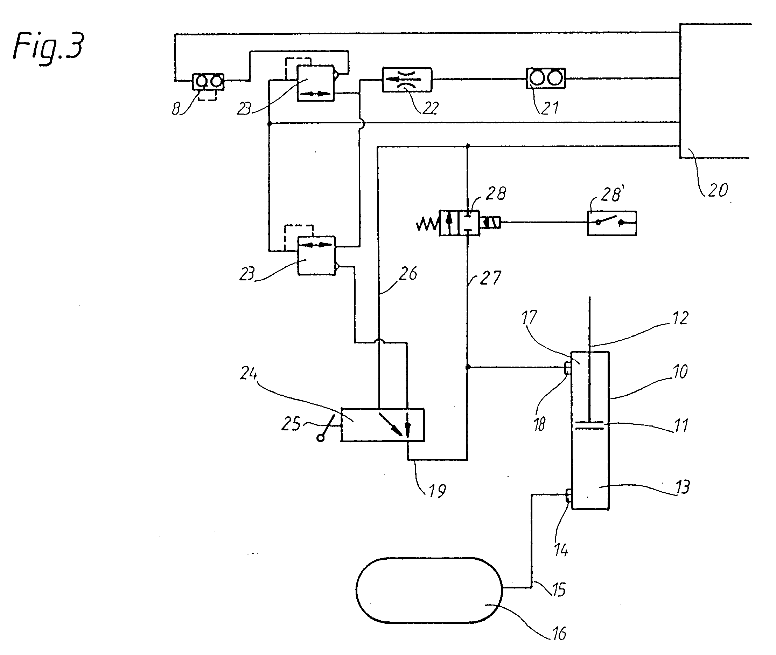

In der Zeichnung ist die Erfindung an Hand eines Ausführungsbeispieles schematisch veranschaulicht. Fig.1 zeigt eine Seitenansicht einer an der Rückseite eines Traktors angebauten erfindungsgemäßen Vorrichtung. Fig.2 stellt eine Draufsicht auf die erfindungsgemäße Vorrichtung nach Fig.1 dar. Fig.3 zeigt das hydraulisch-pneumatische Schaltschema.

Die erfindungsgemäße Vorrichtung ist an der Rückseite eines Traktors 1 angebaut, der in der Zeichnung lediglich schematisch dargestellt ist. Der Anbau erfolgt beispielsweise in üblicher Weise an den an der Rückseite vorgesehenen Befestigungspunkten einer Dreipunktaufhängung od.dgl. Die Anbringung erfolgt an der rechten Seite des Traktors 1, also etwa hinter dem rechten Hinterrad des Traktors 1. Zusätzlich ist noch eine bekannte Mäheinrichtung mittig an der Rückseite des Traktors angebracht, mit welcher der Streifen zwischen benachbarten Reihen von Weinstöcken, Obstbäumen od.dgl., auf welchen der Traktor 1 fährt, in üblicher Weise gemäht, wird. Sowohl diese bekannte Einrichtung als auch die erfindungsgemäße Vorrichtung werden von der Zapfwelle 2 des Traktors 1 angetrieben.

Die erfindungsgemäße Vorrichtung weist einen plattenförmigen Träger 3 auf, der an der Rückseite des Traktors 1 um eine etwa senkrecht zur Fahrtrichtung verlaufende Achse 4 schwenkbar ist. Das eine Ende 4' (siehe Fig.2) dieser Achse 4 ist in nicht dargestellter, an sich bekanntr Weise über einen Silentblock an einem mit dem Traktor 1 verbundenen Grundkörper 33 gelagert, die Lagerung des anderen Endes 4'' ist mit einem Kardangelenk 34 verbunden, das über einen Arm 35 am Grundkörper 33 angelenkt ist. Dadurch kann der Träger 3 seine Lage relativ zum Grundkörper 33 ändern, dieser Träger 3 kann also nicht nur in eine in Fig.1 strichliert dargestellte Lage hochgeschwenkt werden, sondern der Träger 3 kann sich auch allen Bodenunebenheiten anpassen.

Auf dem Träger 3 ist ein Arm 6 um eine Achse 7 schwenkbar gelagert, die etwa senkrecht zur Bodenoberfläche 5 verläuft. Der Arm 6 trägt eine an sich bekannte, von einer rotierenden Messerscheibe gebildete Mäheinrichtung 32. Der Antrieb dieser Mäheinrichtung 32 wird durch einen am Arm 6 gelagerten Hydraulikmotor 8 bewirkt.

Die Verschwenkung des Armes 6 zwischen der in Fig.2 mit vollen Linien dargestellten eingeschwenkten Stellung und der in Fig.2 mit strichlierten Linien dargestellten ausgeschwenkten Stellung erfolgt über eine Kolben-Zylinderanordnung 9. Der Zylinder 10 derselben ist am Träger 3 schwenkbar gelagert. In diesem Zylinder befindet sich ein Kolben 11 (siehe Fig.3), dessen Kolbenstange 12 mit einem Ansatz des Armes 6 gelenkig verbunden ist, derart, daß durch die Bewegung der Kolbenstange 12 der Arm 6 und damit auch die vom Arm 6 getragene Mäheinrichtung 32 verschwenkt werden.

Wie insbesondere aus Fig.3 hervorgeht, ist der Kolben 11 zweiseitig beaufschlagbar, wobei die eine Kolbenfläche einen Zylinderraum 13 begrenzt, der über einen Anschluß 14 und eine (in Fig.2 nicht dargestellte) Leitung 15 mit einem pneumatischen Druckspeicher 16 in Verbindung steht.

Die andere Kolbenfläche begrenzt einen Zylinderraum 17 (siehe Fig.3), der über einen Anschluß 18 mit einer (in Fig.2 nicht dargestellten) Druckmittelzufuhrleitung 19 verbunden ist. Wie insbesondere auch aus Fig.3, wo das hydraulisch-pneumatische Schema dargestellt ist, hervorgeht, wird das hydraulische Druckmittel einem Tank 20 entnommen und über eine Zahnradpumpe 21 in die Druckmittelzufuhrleitung 19 gefördert. Die Zahnradpumpe 21 wird, wie aus Fig.2 hervorgeht, über einen Zahnriemen 21' von einer mit der Zapfwelle 2 des Traktors 1 verbundenen Zahnriemenscheibe angetrieben. In die Druckmittelzufuhrleitung sind ein Durchflußmengenregler 22 und Druckregler 23 eingeschaltet. Ferner ist in der Druckmittelzufuhrleitung 19 ein Steuerventil 24 angeordnet, das am Arm 6 befestigt ist und dessen Ventilkörper durch einen Fühler 25 verstellbar ist. Der Fühler 25 ist am Arm 6 schwenkbar gelagert, befindet sich in einer Ebene mit der Mäheinrichtung 32 und ist der Form derselben angepaßt, sodaß er die Mäheinrichtung 32 teilweise umgibt. Dieser Fühler 25 wird verschwenkt, wenn er an Hindernisse, beispielsweise an Weinstöcke oder Obstbäume, anstößt, wobei durch die besondere Anordnung des Fühlers nicht nur sichergestellt ist, daß eine Verschwenkung des Fühlers erst dann erfolgt, wenn sich die Mäheinrichtung in unmittelbarer Nähe dieser Hindernisse befindet, sondern auch ein Schutz gegen Beschädigung der Hindernisse durch die Mäheinrichtung gegeben ist.

Das über die Zahnradpumpe 21 geförderte hydraulische Druckmedium dient, wie aus dem hydraulisch-pneumatischen Schaltschema in Fig.3 hervorgeht, auch zum Antrieb des hydraulischen Motors 8 für die Mäheinrichtung 32.

Das Steuerventil 24 ist durch eine nicht dargestellte Federanordnung in seiner in Fig.3 gezeigten Endstellung gehalten, in der eine Zufuhr von hydraulischem Druckmittel zum Zylinderraum 17 erfolgt, wodurch entgegen dem Druck der im Zylinderraum 13 befindlichen Luft der Kolben 11 derart verschoben wird, daß die Kolbenstange 12 den Arm 6 in eine Lage verschwenkt, in der die Mäheinrichtung 32 zwischen benachbarten Weinstöcken, Obstbäumen od.dgl. einer Reihe im Einsatz ist. Berührt der Fühler 25 einen solchen Weinstock, Obstbaum od.dgl. und erfolgt hiedurch eine Verschwenkung dieses Fühlers 25, so wird auch der Ventilkörper des Steuerventils 24 verschoben, der Zylinderraum 17 wird über die Leitung 26 druckentlastet und der Kolben 11 und damit die Kolbenstange 12 werden durch den im Zylinderraum 13 herrschenden pneumatischen Druck in eine Lage verschoben, in der der Arm 6 einschwenkt, und zwar so lange, bis der Kontakt des Fühlers 25 mit dem Hindernis beendet ist und daher der Fühler 25 wieder in seine Ausgangslage zurückkehrt.

Für bestimmte Arbeitsvorgänge ist es zweckmäßig, eine manuell steuerbare Einrichtung zur Verschwenkung des Armes 6, unabhängig von der durch den Fühler 25 bewirkten Verschwenkung dieses Armes, vorzusehen. Hiezu ist der Zylinderraum 17 bzw. die zu diesem Zylinderraum führende Druckmittelzufuhrleitung 19 über eine Entlastungsleitung 27 mit der Leitung 26 bzw. mit dem Tank 20 verbunden, in welche Entlastungsleitung 27 ein elektrisch steuerbares Magnetventil 28 eingeschaltet ist, das über ein elektrisches Kabel mit einem elektrischen Schalter 28' derart verbunden ist, daß bei Betätigung des Schalters 28' das Magnetventil 28 geöffnet und dadurch der Zylinderraum 17 druckentlastet wird. Der elektrische Schalter 28' ist zweckmäßig in der Fahrerkabine des Traktors 1 angeordnet, sodaß der Fahrer diesen Schalter betätigen kann, ohne diese Fahrerkabine verlassen zu müssen.

Der Träger 3 ist mit Konsolen 30, 30' versehen, in welchen Stützräder 31, 31' gelagert sind, die auf der Bodenoberfläche 5 abrollen. Das Stützrad 30' befindet sich hierbei an jener Seite des Trägers 3, wo die Lagerung 4'' der Achse 4 mittels des Armes 35 erfolgt. Dadurch wird - in Verbindung mit der Lagerung der Achse 4 des Trägers 3, ein konstanter Bodenabstand der Mäheinrichtung 32 sichergestellt. Die Lagerung der Stützräder 31,31' ist hiebei schwenkbar ausgebildet, damit diese bei Kurvenfahrt eine entsprechende Stellung einnehmen können.

Soll die erfindungsgemäße Vorrichtung nicht zum Einsatz gelangen, aber auch nicht abgebaut werden, so kann der Träger 3 zusammen mit den darauf befindlichen Einrichtungen um die Achse 4 in die in Fig.1 strichliert dargestellte Lage hochgeschwenkt werden.

## Patentansprüche

1. Verfahrbare Vorrichtung zum Mähen von Grundstücken, die von der Bodenoberfläche abstehende Hindernisse aufweisen, mit einer um eine erste, senkrecht zur Bodenoberfläche (5) verlaufende Achse in einer ersten Ebene rotierenden Messerscheibe die eine Mäheinrichtung (32) bildet, und die an einem Arm (6) angeordnet ist, der um eine zweite senkrecht zur Bodenoberfläche (5) verlaufende Achse (7) mittels einer Betätigungseinrichtung (9), vorzugsweise einer druckmittelbetätigten Kolben-Zylinderanordnung (10,11), verschwenkbar ist, wobei die Betätigungseinrichtung (9) für den Arm (6) von einem Steuergerät (24), vorzugsweise einem in einer Druckmittelzufuhrleitung (19) zur Kolben-Zylinderanordnung (10,11) angeordneten Steuerventil, gesteuert ist, das mit einem in einer zweiten Ebene verschwenkbaren Fühler (25) in Wirkverbindung steht, der der Form des kreisförmigen Umfanges der rotierenden Messerscheibe angepaßt ist und am verschwenkbaren Arm (6) oder an einem zusammen mit diesem Arm (6) verschwenkbaren Teil gelagert ist, dadurch gekennzeichnet, daß die erste Ebene und die zweite Ebene zusammenfallen, sodaß der Fühler (25) in einer Ebene mit der rotierenden Messerscheibe angeordnet ist, wobei der Fühler den Umfang der kreisförmigen rotierenden Messerscheibe (32) zumindest teilweise umgibt, wobei der Fühler gleichzeitig eine Schutzfunktion ausübt, also verhindert, daß ein Hindernis durch die Messerscheibe beschädigt wird.

2. Vorrichtung nach Anspruch 1, dadurch gekennzeichnet, daß das Steuerventil (24) durch eine Federanordnung in seiner einen Endstellung gehalten ist und durch den Fühler (25) entgegen der durch die Federanordnung ausgeübten Kraft in seine andere Endstellung verschiebbar ist.

3. Vorrichtung nach Anspruch 1 oder 2, dadurch gekennzeichnet, daß die Kolben-Zylinderanordnung (10,11) einen zweiseitig beaufschlagten Kolben (11) aufweist, wobei der von der' einen Kolbenseite begrenzte Zylinderraum (17) an die das Steuergerät (24) aufweisende Druckmittelzufuhrleitung (19) angeschlossen ist, wogegen der von der anderen Kolbenseite begrenzte Zylinderraum (13) einen abgeschlossenen Raum bildet oder mit einem zusätzlichen abgeschlossenen Raum (16) in Verbindung steht, in welchem Zylinderraum (13) bzw. zusätzlichen Raum (16) ein komprimierbares Medium, insbesondere Luft, vorhanden ist.

4. Vorrichtung nach Anspruch 1, 2 oder 3, dadurch gekennzeichnet, daß eine manuell steuerbare Einrichtung (28,28') zur Verschwenkung des die Mäheinrichtung (32) tragenden Armes (6) vorgesehen ist.

5. Vorrichtung nach Anspruch 4, dadurch gekennzeichnet, daß der an die Druckmittelzufuhrleitung (19) angeschlossene Zylinderraum (17) mit einer Entlastungsleitung (27) verbunden ist, in der ein manuell steuerbares Ventil (28), vorzugsweise ein durch Schließen eines elektrischen Schalters (28') betätigbares Magnetventil (28), angeordnet ist.

6. Vorrichtung nach einem der Ansprüche 1 bis 5, dadurch gekennzeichnet, daß die Schwenkachse (7) des die Mäheinrichtung und den Fühler (25) tragenden Armes (6), die Betätigungseinrichtung (9) zur Verschwenkung desselben und das Steuergerät (24) auf einem Träger (3) angeordnet ist, der um eine annähernd senkrecht zur Schwenkachse (7) des Armes (6) verlaufende Achse (4) schwenkbar gelagert ist.

7. Vorrichtung nach Anspruch 6, dadurch gekennzeichnet, daß eine Lagerstelle (4'') der Achse (4) in einer zur Schwenkachse (7) etwa parallelen Richtung verstellbar angeordnet ist.

8. Vorrichtung nach Anspruch 6 oder 7, dadurch gekennzeichnet, daß der Träger (3) mit wenigstens einer die Bodenoberfläche (5) berührenden Stützeinrichtung, insbesondere wenigstens einem an der Bodenoberfläche (5) abrollenden Stützrad (31,31'), versehen ist.

9. Vorrichtung nach Anspruch 8, dadurch gekennzeichnet, daß die Lagerung des Stützrades (31,31') drehbar ausgebildet ist.

## Claims

1. Mobile apparatus for mowing of plots having obstacles protruding from the bottom surface, comprising a first cutter disc rotating in a first plane around a first axis extending perpendicularly to the bottom surface (5),said cutter disc constituting a mowing device (32) and being positioned on an arm (6) that is swivellable around a second axis (7) extending perpendicularly to the bottom surface (5) by means of an operating device (9), preferably a pressurized piston-cylinder device (10,11), wherein the operating device (9) for the arm (6) is controlled by a control apparatus (24), preferably a control valve disposed in a pressurized medium supply line (19) for the piston-cylinder device (10,11), which control apparatus is in operating connection with a sensor (25) swivellable in a second plane and being adapted to the shape of the circular periphery of the rotating cutter disc and being bearingly supported on the swivellable arm (6) or on a member that is swivellable in common with this arm (6), characterized in that the first plane and the second plane coincide so that the sensor (25) is disposed in a plane with the rotating cutter disc, the sensor at least partially surrounding the periphery of the circular rotating cutter disc (32) and simultaneously provides for a protective function, hence prevents that an obstacle is damaged by the cutter disc.

2. Apparatus according to claim 1, characterized in that the control valve (24) is kept by a spring device in its one end position and is shiftable by the sensor (25) into its other end position against the force of the spring device.

3. Apparatus according to claim 1 or 2, characterized in that the piston-cylinder device (10,11) comprises a double-acting piston (11), the cylinder space (17) confined by the one piston side being connected to the pressurized medium supply line (19) having the control apparatus (24), whereas the cylinder space (13) confined by the other piston side constitutes a closed space or is in connection with an additional closed space (16), a compressible medium, particularly air, being provided in said cylinder space (13) or in said additional space (16).

4. Apparatus according to claim 1, 2 or 3, characterized in that a manually controllable device (28,28') for swivelling the arm (6) carrying the mowing device (32) is provided.

5. Apparatus according to claim 4, characterized in that the cylinder space (17) connected to the pressurized medium supply line (19) is connected with a release line (27) in which a manually controllable valve (28) is provided, preferably an electro valve (28) operable by the closure of an electric switch (28').

6. Apparatus according to any of claims 1 to 5, characterized in that the swivel axis (7) of the arm (6) carrying the mowing device and the sensor (25), the operating device (9) for swivelling same and the control apparatus (24) are disposed on a carrier (3) that is bearingly supported for swivel motion around an axis (4) extending substantially perpendicularly to the swivel axis (7) of the arm (6).

7. Apparatus according to claim 6, characterized in that a bearing (4'') of the axis (4) is adjustable in a direction extending substantially parallel to the swivel axis (7).

8. Apparatus according to claim 6 or 7, characterized in that the carrier (3) is provided with at least one supporting device contacting the bottom surface (5), particularly with at least one support wheel (31,31') running on the bottom surface (5).

9. Apparatus according to claim 8, characterized in that the bearing of the support wheel (31,31') is rotatable.

## Revendications

1. Dispositif mobile pour le fauchage de terrains présentant des obstacles au niveau du sol, comportant un disque de coupe constituant une tête de fauchage (32) tournant dans un premier plan autour d'un premier axe disposé perpendiculairement à la surface du sol (5) et porté par un bras (6) pouvant pivoter autour d'un second axe (7) disposé perpendiculairement à la surface du sol (5), sous l'action d'un dispositif d'entraînement (9), de préférence un système piston & cylindre (10, 11) actionné par un fluide sous pression, le dispositif d'entraînement (9) du bras (6) étant piloté par un appareil de commande (24), de préférence une vannepilote disposée dans la conduite d'admission de fluide sous pression (19) du système piston & cylindre (10, 11), le fonctionnement de cette vanne étant associé à un palpeur (25) pivotant dans un second plan, dont la forme épouse le contour circulaire du disque de coupe en rotation, et qui tourne sur paliers sur le bras pivotant (6) ou sur une pièce pouvant pivoter en même temps que ce bras (6), caractérisé en ce que le premier et le second plan coïncident, de telle sorte que le palpeur (25) se trouve dans le même plan que le disque de coupe en rotation, le palpeur entourant au moins partiellement la circonférence du disque de coupe (32) en rotation, le palpeur assurant en même temps une fonction de protection en évitant ainsi qu'un obstacle ne soit endommagé par le disque de coupe.

2. Dispositif selon la revendication 1, caractérisé en ce que la vanne-pilote (24) est maintenue dans l'une de ses positions extrêmes, par un système a ressort et peut se déplacer vers sa seconde position extrême, sous l'action du palpeur (25) qui s'oppose à l'effort exercé par le système a ressort.

3. Dispositif selon l'une ou l'autre des revendications 1 ou 2, caractérisé en ce que le système piston & cylindre (10, 11) comporte un piston à double effet (11), la chambre de cylindre (17) limitée par l'une des faces du piston est raccordée à la conduite d'admission de fluide sous pression (19) comportant la vannepilote (24), tandis que la chambre de cylindre (13) limitée par la seconde face du piston forme un espace fermé ou relié à un espace complémentaire fermé (16), cet espace fermé (13) et cet espace complémentaire fermé (16) éventuel étant remplis par un fluide compressible, en particulier par de l'air.

4. Dispositif selon l'une quelconque des revendications 1, 2 ou 3, caractérisé en ce qu'un dispositif à commande manuelle (28, 28') est prévu pour faire pivoter le bras (6) portant la tête de fauchage (32).

5. Dispositif selon la revendication 4, caractérisé en ce que la chambre de cylindre (17) raccordée à la conduite d'admission de fluide sous pression (19) est reliée à une conduite de décharge (27) comportant une vanne à commande manuelle (28), de préférence une électrovanne (28) actionnée par la fermeture d'un interrupteur électrique (28').

6. Dispositif selon l'une quelconque des revendications 1 à 5, caractérisé en ce que l'axe de pivotement (7) du bras (6) portant la tête de fauchage et le palpeur (25), le dispositif d'entraînement (9) du pivotement de ceux-ci, ainsi que l'appareil de commande (24), sont disposés sur un support (3) qui peut pivoter sur paliers autour d'un axe (4) dont la position est substantiellement perpendiculaire à l'axe de pivotement (7) du bras (6).

7. Dispositif selon la revendication 6, caractérisé en ce qu'un point d'appui (4'') de l'axe (4) est disposé de façon réglable dans une direction substantiellement parallèle à l'axe de pivotement (7).

8. Dispositif selon l'une ou l'autre des revendications 6 ou 7, caractérisé en ce que le support (3) comporte au moins un dispositif d'appui en contact avec la surface du sol (5), en particulier au moins une roue d'appui (31, 31') roulant à la surface du sol (5).

9. Dispositif selon la revendication 8, caractérisé en ce que le montage de la roue d'appui (31, 31') est réalisé de telle sorte qu'elle puisse pivoter.
